# EUROPEAN PATENT APPLICATION

(11) **EP 1 742 179 A1**
(43) Date of publication of application: **10.01.2007**
(21) Application number: 06014034.0
(22) Date of filing: 06.07.2006
(51) Int. Cl.: G06T 11/00

(54) **Method and apparatus for controlling image in wireless terminal**

(30) Priority: 08.07.2005 KR 20050061587
(71) Applicant: Samsung Electronics Co., Ltd., Suwon-si, Gyeonggi-Do (KR)
(72) Inventor: Oh, Hye-Won, Yeongtong-gu Suwon-si Gyeonggi-do (KR); Kang, Chang-Taek, Yeongtong-gu Suwon-si Gyeonggi-do (KR); Kim, Soon-Jin, Yeongtong-gu Suwon-si Gyeonggi-do (KR); Kim, Yun-Hyang, Yeongtong-gu Suwon-si Gyeonggi-do (KR); Kim, Bum-Soo, Yeongtong-gu Suwon-si Gyeonggi-do (KR)
(74) Representative: Lang, Johannes

(57) **Abstract**

A method and apparatus for controlling an image in a wireless terminal transmitting/receiving a facial expression photograph in a message transmission/reception mode and a video call mode are provided. If a facial expression photograph attachment option is selected in a message transmission mode, facial expression types are displayed. A facial expression of a photograph to be transmitted is changed to a facial expression selected from the facial expression types, and the selected facial expression is attached as a facial expression photograph. A message attached to the facial expression photograph is then transmitted.

## Description

### BACKGROUND OF THE INVENTION

### 1. Field of the Invention

The present invention relates generally to a method of controlling an image in a wireless terminal. More particularly, the present invention relates to a method of controlling an image in a wireless terminal and transmitting/receiving a facial expression photograph in a message transmission/reception mode and in a video call mode.

### 2. Description of the Related Art

Wireless terminals have been developed with high-speed data communication functions in addition to voice call functions. The wireless terminals with the data communication function can process packet data and image data.

These types of wireless terminals are capable of transmitting and receiving image data. Therefore, the wireless terminals can store image data received from a remote node and transmit acquired image data to the remote node. The wireless terminal may include a camera module for capturing images and a display unit for displaying the images captured by the camera module. The camera module may use a charge coupled device (CCD) or complementary metal oxide semiconductor (CMOS) sensor, and the display unit may use a liquid crystal display (LCD). The miniaturization of the camera module has led to the miniaturization of the wireless terminal including the camera module. The wireless terminal can capture images and display the captured images as moving pictures or still pictures, and transmit the captured images to the remote node.

Service providers and users are increasing their demands regarding image mail. This has led to the realization of many services of the wireless terminal which will be significantly increased in the future. Also, functions of editing images in the wireless terminal by the operations of a user are increasing. For example, techniques of zooming in or out a photographic image stored in the wireless terminal and composing a plurality of photographic images are realized.

Among techniques regarding photographic images, a technique of changing a facial expression of a photographic image to a selected facial expression is realized. If the technique of changing a facial expression of a photographic image to a selected facial expression can be applied to other services, more convenient services can be provided to users.

Accordingly, there is a need for an improved method for controlling an image in a wireless terminal transmitting a message attached to a photograph which is changed to a facial expression photograph in message transmission mode.

### SUMMARY OF THE INVENTION

An aspect of exemplary embodiments of the present invention is to address at least the above problems and/or disadvantages and to provide at least the advantages below. Accordingly, an aspect of exemplary embodiments of the present invention is to provide a method of controlling an image in a wireless terminal transmitting a message attached to a photograph which is changed to a facial expression photograph in a message transmission mode.

Another object of an exemplary embodiment of the present invention is to provide a method of controlling an image in a wireless terminal displaying a sender's photograph which is changed to a facial expression photograph and informing a user of message reception when a message is received.

According to another object of an exemplary embodiment of the present invention is to provide a method of controlling an image in a wireless terminal transmitting a photograph changed to a facial expression photograph in a video call mode.

According to one aspect of an exemplary embodiment of the present invention, a method of controlling an image in a wireless terminal is provided. Facial expression types are displayed if a facial expression photograph attachment option is selected in a message transmission mode, displaying facial expression types. A facial expression of a photograph to be transmitted is changed to a facial expression selected from the facial expression types, the selected facial expression is attached as a facial expression photograph, and a message attached to the facial expression photograph is transmitted.

According to another aspect of an exemplary embodiment of the present invention, a method of controlling an image in a wireless terminal is provided. If a message is received, an emotional state is extracted by analyzing the content of the message. A sender's photograph is changed to a facial expression photograph corresponding to the extracted emotional state. The sender's photograph which is changed to the facial expression photograph corresponding to the extracted emotional state is displayed and the user is simultaneously informed of reception of the message.

According to another aspect of an exemplary embodiment of the present invention, a method of controlling an image in a wireless terminal is provided. If a facial expression photograph transmission option is selected in a video call mode, facial expression types are displayed. A facial expression of a photograph to be transmitted is changed to a facial expression selected from the facial expression types and the selected facial expression is transmitted as a facial expression photograph.

### BRIEF DESCRIPTION OF THE DRAWINGS

The above and other exemplary objects, features and advantages of certain exemplary embodiments of the present invention will be more apparent from the following detailed description taken in conjunction with the accompanying drawings, in which:
FIG. 1 is a block diagram of a wireless terminal according to an exemplary embodiment of the present invention;
FIG. 2 is a flowchart illustrating a method of controlling an image in a message transmission mode of a wireless terminal according to an exemplary embodiment of the present invention;
FIG. 3 is a flowchart illustrating a method of controlling an image in a message reception mode of a wireless terminal according to an exemplary embodiment of the present invention; and
FIG. 4 is a flowchart illustrating a method of controlling an image in a video call mode of a wireless terminal according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

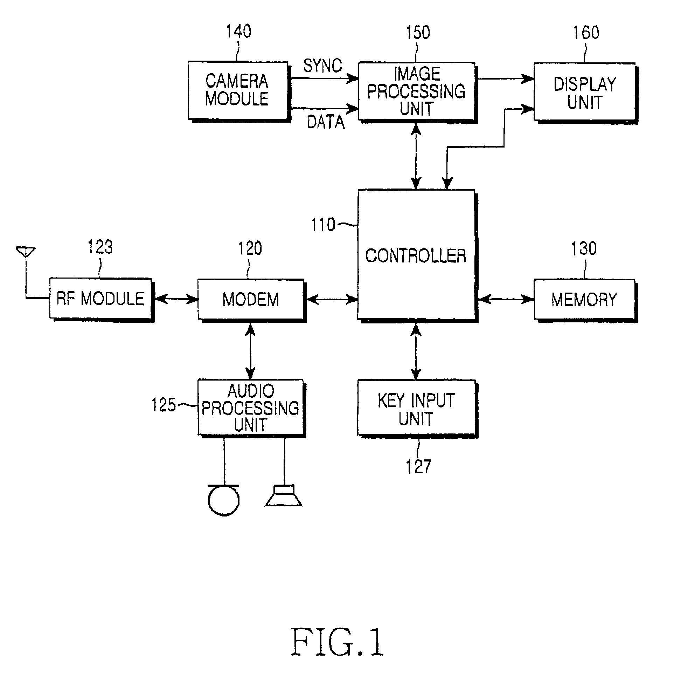

FIG. 1 is a block diagram of a wireless terminal including a camera module 140 according to an exemplary embodiment of the present invention.

Referring to FIG. 1, a radio frequency (RF) module 123 performs a wireless communication function of the wireless terminal. The RF module 123 includes an RF transmitter for up-converting a frequency of a transmission signal and for amplifying the up-converted transmission signal, and an RF receiver for low-noise-amplifying a received signal and down-converting a frequency thereof. A modem 120 includes a transmitter for encoding and modulating the transmission signal, and a receiver for demodulating and decoding the received signal. An audio processing unit 125 may include a codec, which includes a data codec for processing packet data and an audio codec for processing an audio signal such as voice. The audio processing unit 125 converts a digital audio signal received from the modem 120 to an analog audio signal using the audio codec and reproduces the converted analog audio signal, and converts an analog audio signal generated by a microphone to a digital audio signal and transmits the converted digital audio signal to the modem 120. Alternatively, the codec may be included in a controller 110.

A memory 130 may be comprised of a program memory and a data memory. The program memory may store programs for controlling a general operation of the wireless terminal and programs for controlling the wireless terminal to transmit/receive a facial expression photograph changed to a selected facial expression in a message transmission/reception mode and a video call mode according to an exemplary embodiment of the present invention. The data memory temporarily stores data generated while executing the programs.

The controller 110 controls the entire operation of the wireless terminal. Also, the controller 110 may include the modem 120 and the codec. Further, the controller 110 transmits a message in the message transmission mode by attaching a photograph which is changed to a facial expression selected by a facial expression photograph attachment option to the message as a facial expression photograph according to an exemplary embodiment of the present invention.

According to an exemplary embodiment of the present invention, when a message is received, the controller 110 extracts an emotional state based on content of the message, displays a sender's photograph changed to a facial expression corresponding to the extracted emotional state, and informs the user of reception of the message.

According to an exemplary embodiment of the present invention, the controller 110 transmits a photograph which is changed to a selected facial expression to a recipient in the video call mode.

The camera module 140 includes a camera sensor for capturing image data and converting a captured optical signal to an electrical signal, and a signal processing unit for converting an analog image signal output from the camera sensor to digital data. The camera sensor is assumed to be a CCD, and the signal processing unit can be realized using a digital signal processor (DSP). The camera sensor and the signal processing unit may be realized in one body or separately.

An image processing unit 150 generates screen data to display the image signal output from the camera module 140. The image processing unit 150 processes the image signal output from the camera module 140 on a per-frame basis and outputs the processed frame image data according to characteristics of a display unit 160 and the size of a screen of the display unit 160. The image processing unit 150, including an image codec, encodes the frame image data to be displayed on the display unit 160 in a predetermined method, and decodes the encoded frame image data to the original frame image data. Here, the image codec may be a JPEG codec, an MPEG codec, or Wavelet codec. It is assumed that the image processing unit 150 has an on-screen display (OSD) function, and the image processing unit 150 may output OSD data according to the size of the screen under the control of the controller 110.

The display unit 160 displays the frame image data output from the image processing unit 150 and the user data output from the controller 110 on the screen. The display unit 160 may be comprised of an LCD. The display unit 160 may also include an LCD controller, a memory for storing frame image data, and an LCD display component. If the LCD is realized with a touch screen scheme, the display unit 160 may serve as an input unit. A key-input unit 127 includes keys for inputting character number information and function keys for setting various functions.

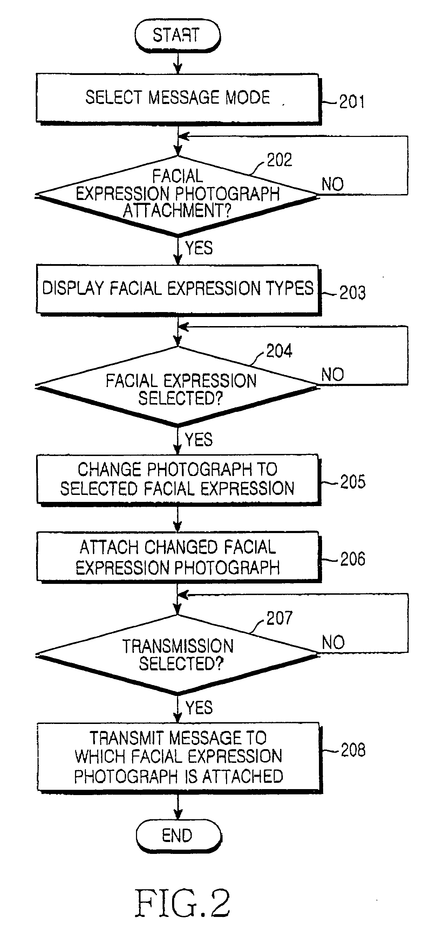

Operations of controlling an image in the message transmission/reception mode and in the video call mode of the wireless terminal will now be described in detail with reference to FIGs. 2 to 4.

FIG. 2 is a flowchart illustrating a method of controlling an image in the message transmission mode of a wireless terminal according to an exemplary embodiment of the present invention. The method illustrated in FIG. 2 will now be described in detail with reference to FIG. 1.

In step 201, the message transmission mode of the wireless terminal is selected. In step 202, the controller 110 determines whether the facial expression photograph attachment option is selected. If the facial expression photograph attachment option is selected, the controller 110 displays facial expression types in step 203. The facial expression types may be displayed with text and icons.

In step 204, the controller 110 determines whether a facial expression is selected from the facial expression types. If a facial expression is selected, the controller 110 changes a facial expression of a photograph to be attached to the selected facial expression and displays the photograph comprising the selected facial expression in step 205. The photograph may be previously set by a user of the wireless terminal or may be selected by the user before or after the facial expression is selected.

In step 206, the controller 110 attaches the photograph comprising the selected facial expression to a message as a facial expression photograph.

In step 207, the controller 110 determines whether transmission of the message attached to the facial expression photograph is selected. If transmission of the message is selected, the controller 110 transmits the message attached to the facial expression photograph to a recipient in step 208.

Through the procedures of FIG. 2, the user of the wireless terminal can previously set a user's photograph, change a facial expression of the set photograph to a facial expression corresponding to a user's emotional state in the message transmission mode, and transmit a message attached to the facial expression photograph to a recipient.

Also, the user may select a user's photograph in the message transmission mode, change a facial expression of the selected photograph to a facial expression corresponding to a user's emotional state, and transmit a message attached to the facial expression photograph to a recipient.

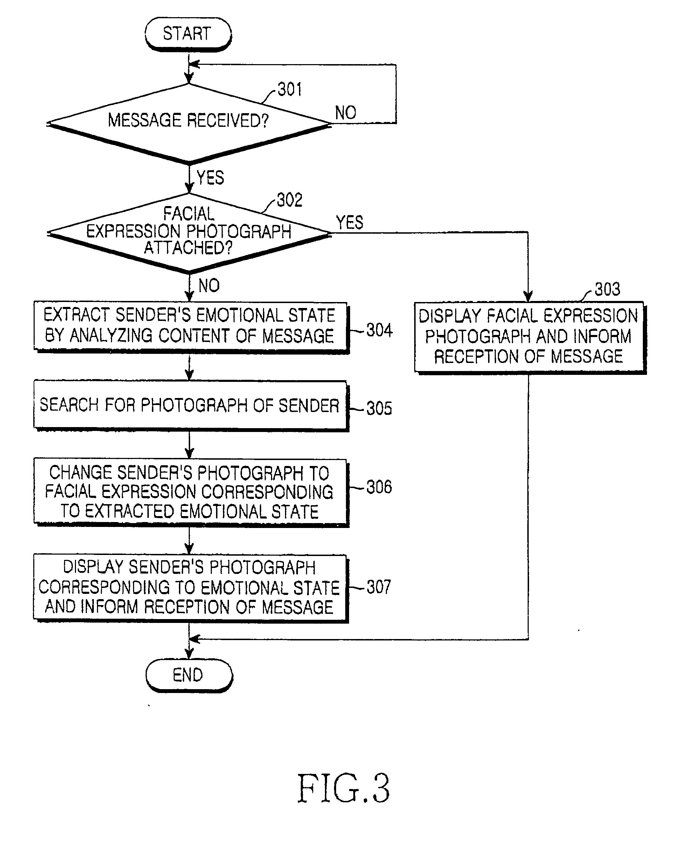

FIG. 3 is a flowchart illustrating a method of controlling an image in the message reception mode of a wireless terminal according to an exemplary embodiment of the present invention. The method illustrated in FIG. 3 will now be described in detail with reference to FIG. 1.

In step 301, the controller 110 determines whether a message is received. If a message is received, the controller 110 determines whether a facial expression photograph is attached to the message in step 302. If a facial expression photograph is attached to the message, the controller 110 displays the attached facial expression photograph on the display unit 160 and simultaneously informs the user of reception of the message in step 303.

If a facial expression photograph is not attached to the message, the controller 110 analyzes content of the message and extracts a sender's emotional state based on the analysis in step 304. A method of extracting an emotional state by analyzing the content of a message may be achieved by using words included in the content of the message or by using the disclosed technology.

After extracting the sender's emotional state based on the content of the message, the controller 110 extracts a facial expression corresponding to the extracted emotional state. In step 305, the controller 110 searches for information of the sender.

In step 305, the controller 110 can search the memory 130 or a photo phonebook for a photograph corresponding to the information of the sender stored in a phonebook. In an exemplary embodiment of the present invention, the controller 110 searches the photo phonebook for the information of the sender.

After searching for and extracting the photograph of the sender, in step 306, the controller 110 changes a facial expression of the extracted sender's photograph to the facial expression corresponding to the emotional state extracted in step 304.

After changing the facial expression of the sender's photograph to the facial expression corresponding to the extracted emotional state, in step 307, the controller 110 displays the sender's photograph is changed to the facial expression corresponding to the extracted emotional state on the display unit 160 and the user is informed of reception of the message.

Through the procedures of FIG. 3, when a message is received, the user of the wireless terminal can estimate the content of the message through a sender's photograph comprising a facial expression corresponding to the content of the message.

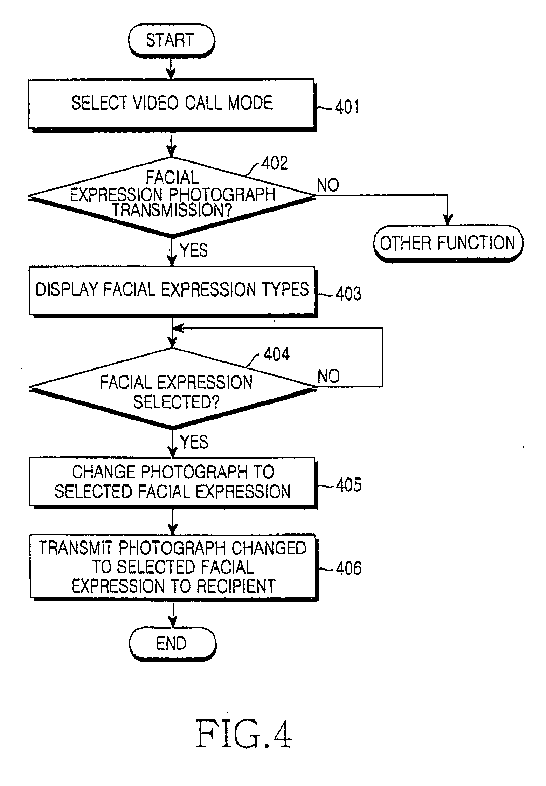

FIG. 4 is a flowchart illustrating a method of controlling an image in a video call mode of a wireless terminal according to an exemplary embodiment of the present invention. The method illustrated in FIG. 4 will now be described in detail with reference to FIG. 1.

In step 401, the video call mode is selected. In step 402, the controller 110 determines whether a facial expression photograph transmission option is selected. If the facial expression photograph transmission option is selected, the controller 110 displays facial expression types in step 403. The facial expression types may be displayed with text and icons.

In step 404, the controller 110 determines whether a facial expression is selected from the facial expression types. If a facial expression is selected, in step 405, the controller 110 changes a facial expression of a photograph to be transmitted to the selected facial expression and displays the photograph comprising the selected facial expression. The photograph can be previously set by a user of the wireless terminal or can be selected by the user before or after the facial expression is selected.

When transmission of the photograph changed to the selected facial expression is selected, in step 406, the controller 110 transmits the photograph changed to the selected facial expression to a recipient as a facial expression photograph.

Through the procedures of FIG. 4, the user of the wireless terminal may previously set a user's photograph, change a facial expression of the set photograph to a facial expression corresponding to a user's emotional state in the video call mode, and transmit the facial expression photograph to a recipient on the line.

Also, the user can select a user's photograph in the video call mode, change a facial expression of the selected photograph to a facial expression corresponding to a user's emotional state, and transmit the facial expression photograph to a recipient on the line.

Although a method of transmitting a facial expression photograph in the video call mode has been described, the same method may be applied in all modes of conversation while transmitting and receiving data to and from another party, such as in a messenger function.

According to the exemplary embodiments of the present invention, a sender's facial expression photograph indicating a current emotional state may be transmitted in the message transmission mode by transmitting/receiving facial expression photographs of users in a message transmission/reception mode and a video call mode. In an exemplary implementation, when a message is received, the user is informed of reception of the message while indicating a sender's emotional state with a sender's facial expression photograph.

Also, in the video call mode, users' emotional states can be exchanged by transmitting users' facial expression photographs to the other parties.

While the present invention has been shown and described with reference to a certain exemplary embodiment thereof, it will be understood by those skilled in the art that various changes in form and details may be made therein without departing from the spirit and scope of the invention as defined by the appended claims.

## Claims

1. A method of controlling an image in a wireless terminal, the method comprising:
displaying facial expression types if a facial expression photograph attachment option is selected in a message transmission mode;
changing a facial expression of a photograph to a facial expression selected from the facial expression types and attaching the selected facial expression as a facial expression photograph; and
transmitting a message attached to the facial expression photograph.

2. The method of claim 1, wherein the photograph is at least one of previously set and selected in the changing of the facial expression of the photograph and attaching the selected facial expression.

3. The method of claim 1, wherein the changing of the facial expression of the photograph and attaching the selected facial expression comprises:
changing the facial expression of the set photograph to a facial expression
selected from the facial expression types and displaying the changed facial expression; and
attaching the photograph comprising the changed facial expression as a facial expression photograph when the photograph comprising the changed facial expression is selected.

4. A method of controlling an image in a wireless terminal, the method comprising:
extracting an emotional state by analyzing content of the message if a message is received;
changing a sender's photograph to a facial expression photograph corresponding to the extracted emotional state; and
displaying the sender's photograph which is changed to the facial expression photograph corresponding to the extracted emotional state and informing reception of the message.

5. The method of claim 4, wherein the changing of the sender's photograph comprises:
searching for a photograph of the sender; and
changing a facial expression of the sender's photograph to a facial expression corresponding to the extracted emotional state if the sender's photograph is found.

6. The method of claim 5, wherein the photograph of the sender is searched in a photo phonebook.

7. The method of claim 4, further comprising:
determining whether a facial expression photograph is attached to the message if the message is received; and
displaying the attached facial expression photograph and simultaneously informing reception of the message if the facial expression photograph is attached to the message.

8. A method of controlling an image in a wireless terminal, the method comprising:
displaying facial expression types if a facial expression photograph transmission option is selected in a video call mode; and
changing a facial expression of a photograph to be transmitted to a facial expression selected from the facial expression types and transmitting the selected facial expression as a facial expression photograph.

9. The method of claim 8, wherein the photograph is at least one of previously set and selected in the facial expression photograph transmission of the video call mode.

10. The method of claim 8, wherein the changing of the facial expression of the photograph and transmitting the selected facial expression comprises:
changing the facial expression of the set photograph to a facial expression selected from the facial expression types and displaying the changed facial expression; and
transmitting the photograph having the changed facial expression as a facial expression photograph when the photograph comprising the changed facial expression is selected.

11. A wireless terminal comprising:
a controller for displaying an attached facial expression photograph on a display unit and for informing a user of reception of the message;
wherein the controller changes a facial expression of a photograph which is attached to a selected facial expression and transmits a message in a message transmission mode.

12. The wireless terminal of claim 11, wherein the controller extracts an emotional state based on content of a message;

13. The wireless terminal of claim 11, wherein the controller displays a sender's photograph which is changed to a facial expression corresponding to the extracted emotional state and informs a user of reception of the message.
